# EUROPEAN PATENT APPLICATION

(11) **EP 3 885 726 A1**
(43) Date of publication of application: **29.09.2021**
(21) Application number: 20461525.6
(22) Date of filing: 02.04.2020
(51) Int. Cl.: G01K 1/14, G01K 3/00, G01K 11/16, G01K 13/00

(54) **TEMPERATURE MONITORING INDICATOR**

(30) Priority: 27.03.2020 PL 43336720
(71) Applicant: Braster SA, 05-850 Ozarów Mazowiecki (PL)
(72) Inventor: Sladowski, Dariusz, 05-082 Latchorzew (PL)
(74) Representative: Witek, Rafal

(57) **Abstract**

The invention concerns a temperature monitoring indicator that contains a liquid-crystal element (in the form of thermosensitive film) which reacts to temperature changes, the method for producing this indicator, as well as the use of this indicator for monitoring the temperature of the human body.

## Description

### Field of the invention

The invention concerns a temperature monitoring indicator that contains a liquid-crystal element (in the form of thermosensitive film) which reacts to temperature changes, the method for producing this indicator, as well as the use of this indicator for monitoring the temperature of the human body.

### State of the art

US4138889 concerns a strip thermometer comprising a transparent supporting strip made of plastic, having cut-out windows in which liquid crystalline materials are placed reacting to temperature changes in various ranges, in microencapsulated form, mixed with a glue. The supporting strip is covered with a very dark masking layer, on which there is an adhesive layer the purpose of which is to attach the indicator. The liquid crystalline material remains colourless until the specific temperature range is reached.

US4198861 reveals a body temperature monitoring thermometer to be attached to the forehead, which contains: a flat element made of transparent plastic with digit/letter markings printed thereon, areas of temperature-reactive liquid crystal material applied on the entire surface of the base layer, an optical filter placed between the liquid crystalline material and the flat element to show the appropriate colour depending on the temperature detected, a dark coating applied on the other side of the liquid crystalline material, and a layer of glue on the entire surface of the indicator. The described thermometer can be placed on the forehead.

US4302971 concerns a thin-film thermometer with a design similar to that of the indicator revealed in US4198861, but where the thermometer is additionally coated with lacquer that protects against moisture, and where a layer of glue (protected by paper) is applied after this lacquer coat has been applied.

US6604854 reveals a thin-film thermometer that contains a base layer on which a multicolour pattern is applied. Distributed on the base layer there are many separate areas that contain temperature-sensitive liquid crystalline material. Optionally, the thermometer may also contain a blocking layer to insulate, inter alia, the areas that contain temperature-sensitive liquid crystalline material. This blocking layer is used when the thermometer is supposed to detect ambient temperature and the surface to which it is attached has a temperature lower or higher than the ambient temperature.

DE20307236 describes a liquid-crystal temperature indicator designed to be stuck onto the forehead to indicate whether a specific person has an elevated body temperature. The indicator consists of a transparent base layer, on which information markings are printed. Layers of temperature-reactive liquid crystalline material are applied side by side on the base layer so that the entire surface of the base is covered. One material reacts to a normal body temperature and the other to an elevated body temperature in such a way that, within the indicated temperature range, the material becomes transparent revealing the printed information, whereas outside the indicated temperature range the liquid crystalline material is black. A layer of glue is applied on the liquid crystalline material in order to enable attaching the indicator to the forehead.

### Brief summary of the invention

The subject matter of the invention is a temperature monitoring indicator that contains a liquid-crystal element which reacts to temperature changes as specified in claims 1-12, the method for producing this indicator as specified in claim 13, as well as the use of this indicator as specified in claim 14.

### Advantages of the invention

The basic advantage of the indicator of the invention is the possibility of instant assessment whether the measured temperature has exceeded a specific value. This possibility results from the fact that the thermosensitive film (which is a liquid-crystal element that reacts to temperature changes) is divided into a monitoring part adhering to the surface of the temperature reading location, preferably the surface of the skin, and at least one reference part protruding from / bent away from said surface.

Thanks to this division of the thermosensitive film, effective identification of temperature is possible also when its value exceeds the colour variation range of the applied thermosensitive film.

The protruding/bent reference part of the thermosensitive film also facilitates the application of the indicator and its removal from the temperature reading location.

Moreover, temperature reading with the use of the indicator of the invention does not require the use of any advanced or expensive measuring equipment such as pyrometers or thermal imaging cameras.

An additional advantage of the indicator of the invention is that it allows to continuously monitor the temperature as opposed to a single measurement in the case of measurements taken using a pyrometer.

In addition, thanks to the division of the indicator into the monitoring part and the reference part, the safety of the temperature reading is increased because it is possible to identify an instance of increased temperature from a long, safe distance.

What is more, production of the indicator of the invention does not require large financial outlays, due to (inter alia) the simplicity of the indicator's construction and the use of a single type of thermosensitive film.

The use of thermosensitive film as the base layer of the indicator of the invention allows to reduce the number of components, which makes the method for its production easy in comparison with the indicators known in the state of the art which contain a non-temperature-sensitive supporting element and in which the thermosensitive elements are applied on selected areas of this supporting element. This additionally provides greater certainty of temperature reading, as there is no risk of the thermosensitive element detaching from the supporting element, which situation is potentially possible in the case of state-of-the-art solutions.

### Drawings

The invention is illustrated by the drawings, where:
Fig. 1 shows an example image recorded during the tests carried out by the creator of the invention (Example 1)
Fig. 2 shows a diagrammatic cross-section of one embodiment of the indicator of the invention (Example 2)
Fig. 3 shows a diagrammatic cross-section of another embodiment of the indicator of the invention (Example 3)
Fig. 4 shows a diagrammatic cross-section of yet another embodiment of the indicator of the invention (Example 4)

### Detailed description of the invention

The invention concerns temperature monitoring indicators that contain a liquid-crystal element sensitive to temperature changes, which indicators - preferably placed on the skin, e.g., on the forehead - enable quick identification of people with normal and elevated body temperature. Elevated temperature, e.g., of the forehead skin, causes a change in the colour of a part of the indicator, which is a sign that the person wearing the indicator may have a fever.

### Liquid-crystal element that reacts to temperature changes

According to the invention, the liquid-crystal element that reacts to temperature changes takes the form of thermosensitive film which is the base layer of the indicator.

The term "base layer" used in this document means that the thermosensitive film, which is the liquid-crystal element of the indicator of the invention, constitutes the basic structural element of the indicator on which its other components are placed. In some preferable embodiments of the invention, the base layer defines the outer circumference of the whole indicator. In other preferable embodiments of the invention, some of the components (e.g. the fixing agent) may protrude beyond the circumference of the base layer.

Preferably, the thermosensitive film that constitutes the liquid-crystal element of the indicator of the invention is a thermosensitive film with a colour variation range from approx. 33°C to approx. 42°C, preferably from approx. 37°C to approx. 42°C, more preferably from approx. 35.5°C to approx. 37°C, and the most preferably from approx. 35.5°C to approx. 40°C.

Preferably, the thermosensitive film is black below the colour variation range, and takes on a colour (colours) different from black in the indicated temperature range and above this range. In other preferable embodiments, the film may take on colours other than black below the colour variation range. In another preferable embodiment, the thermosensitive film has the first colour (e.g. white) below the colour variation range, and takes on a second and/or third colour within the indicated temperature range and above this range respectively, which colours are different from the first colour and preferably in contrast with the first colour. In another preferable embodiment, the film is transparent below the colour variation range, and takes on a colour within and above the indicated temperature range.

The thickness of the thermosensitive film, which constitutes the liquid-crystal element of the indicator of the invention, will depend on the type of film used, but it is preferably within the range from approx. 0.05 mm to approx. 1.0 mm, more preferably from approx. 0.09 mm to approx. 0.5 mm, even more preferably from approx. 0.10 mm to approx. 0.4 mm, and the most preferably from approx. 0.1 mm to approx. 0.3 mm.

The thermosensitive film can preferably be made of thermotropic liquid crystalline compounds, including: cholesteryl pelargonate, cholesteryl oleyl carbonate, cholesteryl propionate, cholesteryl chloride, which - when encapsulated in the form of a liquid crystalline emulsion, after the process of crosslinking - form a thermosensitive layer (e.g. as described in EP 2 528 994).

In particularly preferable embodiments, commercially available products are used as the thermosensitive film, such as: the films manufactured by Braster SA, the films sold by Edmund Optics with a colour variation range from 35°C to 40°C, etc.

There are no specific requirements regarding the dimensions of the thermosensitive film, on condition that it is clearly visible from a safe distance of at least 1 m. The minimum surface area of the thermosensitive film is approx. 0.5 cm². Preferably, the surface area of the thermosensitive film is from approx. 2 to approx. 10 cm².

The thermosensitive film can have any shape, wherein shapes such as the rectangle, square, circle, oval, etc. are particularly preferable.

The liquid-crystal element that reacts to temperature changes can be made of a single type of film. In another preferable embodiment, the element can also be made of several types of film with different colour variation ranges, which would enable more accurate temperature reading.

### Fixing agent

The indicator of the invention contains a fixing agent for placing and immobilizing the indicator at the location where the temperature reading is taken, preferably on the skin, especially the forehead skin.

The fixing agent may be any such element known in the field, which will effectively fix and immobilize the indicator of the invention on the surface of the location where the temperature reading is taken, wherein preferably the fixing agent will ensure that the indicator can be easily placed, durably fixed, and easily removed from said surface.

Preferably, the fixing agent takes the form of a layer of an adhesive agent placed on the thermosensitive film on the side intended for placing at the location where the temperature reading is taken.

The layer of the adhesive agent may be applied on the thermosensitive film by any technique known in the field of the invention, for example, by spraying, screen printing, etc.

According to the invention, the fixing element is placed on a surface that makes up from approx. 20 to approx. 100%, more preferably from approx. 30 to approx. 80%, even more preferably from approx. 40 to approx. 60%, and the most preferably 50% of the surface area of the thermosensitive film. If the fixing agent is placed on the entire surface of the thermosensitive film, then the thermosensitive film is not entirely fixed to the surface of the temperature reading location, but rather only some of its surface area, for example, no more than approx. 90%.

The adhesive agent can be any glue used in the field of the invention, preferably neutral to the skin and not causing any allergic reactions. Preferably, it may be an acrylic, silicone, hydrogel, or other type of glue used for the manufacture of medical adhesive plasters. Silicone-based glues are particularly preferable because they are very delicate and do not cause allergic reactions.

In particularly preferable embodiments of the invention, commercially available glues can be used, such as the Rudaspray® (NOBAMED Paul Danz AG) acrylic glue.

The thickness of the layer of the adhesive agent depends on the applied glue, but it is preferably within the range from approx. 0.001 mm to approx. 1 mm, more preferably from approx. 0.001 mm to approx. 0.5 mm, even more preferably from approx. 0.001 mm to approx. 0.3 mm, and the most preferably from approx. 0.01 mm to approx. 0.1 mm, for example approx. 0.02 mm.

In another embodiment of the invention, the fixing agent takes the form of an adhesive applied on the thermosensitive film from the outer side that does not come into contact with the temperature reading location. In order to effectively fix the thermosensitive film, in principle the adhesive will go beyond the outer circumference of the thermosensitive film.

According to the invention, the adhesive preferably covers a surface that makes up from approx. 20 to 90%, more preferably from approx. 30 to approx. 80%, even more preferably from approx. 40 to approx. 60%, and the most preferably approx. 50% of the surface area of the thermosensitive film.

The adhesive can be any such agent used in the field of the invention. In particularly preferable embodiments of the invention, the following examples of commercially available adhesives may be used: Viscoplast Polopor® (3M Poland), Apteo Care (P.P.H.DALPEX Wroclaw, Poland), Omnifix elastic, Sorbalgon (Paul Hartman AG, Germany), TegadermTM (3M Poland), Omnifilm® (Paul Hartman AG, Germany).

### Thermoinsulating element

According to the invention, the thermosensitive film is applied in such a way that only a part of its surface adheres to the surface of the location where the temperature reading is taken, whereas the remaining (at least one) part of the thermosensitive film protrudes from / is bent away from the surface of the location where the temperature reading is taken, preferably the skin surface.

According to the invention, the (at least one) part of the thermosensitive film that protrudes from / is bend away from the surface of the location where the temperature reading is taken may constitute from approx. 10 to approx. 80%, more preferably from approx. 20 to approx. 70%, even more preferably from approx. 40 to approx. 60%, and the most preferably approx. 50% of the surface area of the thermosensitive film.

In a preferable embodiment of the invention, this (at least one) protruding/bent part of the thermosensitive film can have at least one thermoinsulating element on the inner side facing the surface of the location where the temperature reading is taken, which thermoinsulating element thermally insulates the part of the thermosensitive film from the temperature reading location, e.g., from the skin surface.

The thermoinsulating element may be any such agent used in the field of the invention, on condition that it ensures effective thermal insulation for the part of the thermosensitive film. Preferably, it can be made of paper, crêpe paper, cardboard, thermoinsulating plastic, polystyrene foam, natural leather, imitation leather, thermoinsulating paint (e.g. paint that contains vacuum-hollow nano-ceramic microspheres), etc. The use of paint that contains vacuum-hollow nano-ceramic microspheres may significantly reduce the costs of producing the indicator of the invention.

The thickness of the thermoinsulating element depends on the applied material, but it is preferably within the range from approx. 0.01 mm to approx. 2 mm, more preferably from approx. 0.01 mm to approx. 1 mm, even more preferably from approx. 0.05 mm to approx. 0.7 mm, and the most preferably from approx. 0.1 mm to approx. 0.3 mm.

The thermoinsulating element may be fixed to the thermosensitive film by any technique known in the field of the invention, which ensures the durability of the attachment and does not significantly affect the properties of the thermosensitive film or of the thermoinsulating element. Preferably, the thermoinsulating element may be fixed to the thermosensitive film with glue or by lamination.

In another preferable embodiment, the function of the thermoinsulating element is performed by the air between the protruding/bent part of the thermosensitive film and the surface of the location where the temperature reading is taken.

As stated above, there may be at least one thermoinsulating element on the thermosensitive film, preferably from one to five, and the most preferably one such element. The number of thermoinsulating elements and their shape may depend on the shape and/or size of the thermosensitive film, but may also have a decorative nature.

### Thermoinsulating layer

In yet another preferable embodiment, the thermosensitive film - over an area that corresponds to the contact area between the thermosensitive film and the location where the temperature reading is taken - may have a thermoinsulating layer from the opposite side, i.e., from the outside (facing the surroundings). The presence of the thermoinsulating layer is intended to insulate the monitoring part of the thermosensitive film from the influence of ambient temperature - so that the temperature reading is not disrupted.

The thermoinsulating layer may be any such agent used in the field of the invention, on condition that it is transparent (makes it possible to read a temperature change of the indicator) and ensures effective thermal insulation for the part of the thermosensitive film. Preferably, it can be made of, for example, plastic film (e.g. polyethylene), multilayer plastic film, porous film (such as the Omnifilm® plaster by Paul Hartman AG, Germany), etc.

The thickness of the thermoinsulating layer will depend on the applied material, but it is preferably within the range from approx. 0.01 mm to approx. 2 mm, more preferably from approx. 0.01 mm to approx. 1 mm, even more preferably from approx. 0.05 mm to approx. 0.7 mm, and the most preferably from approx. 0.1 mm to approx. 0.3 mm.

The thermoinsulating layer may be applied on the thermosensitive film by any technique known in the field of the invention, which ensures the durability of the attachment and does not significantly affect the properties of the thermosensitive film or of the thermoinsulating layer. Preferably, it can be applied by spraying or laminating.

As a result of the fact that a part of the thermosensitive film protrudes from / is bent away from the surface of the location where the temperature reading is taken, the thermosensitive film is divided into a monitoring part and a reference part. The monitoring part comes into contact with the surface of the location where the temperature reading is taken, preferably with the skin surface, reacting to the temperature of this surface and changes therein, preferably the temperature of the body. In turn, the role of the reference part is to record the ambient temperature.

In this way, a simple method is ensured for verifying the temperature measured by the indicator of the invention, compared to the homogeneous temperature indicators known in the state of the art. As described above, due to the properties of thermosensitive film, when the temperature, for example, the temperature of the human body, is within the colour variation range of the thermosensitive film, for example, in the event of elevated body temperature, the monitoring part will have a colour that differs from that of the reference part. Preferably, this difference will be very distinct. In this way, it will be very easy to determine whether a specific person has an elevated temperature, because this will only involve comparing the colour of the two parts of the thermosensitive film of the indicator of the invention.

In addition, if the temperature of the temperature reading location exceeds the upper limit of the colour variation range of the thermosensitive film, a rainbow-coloured bar will appear at the place where the monitoring part and the reference part come into contact, thus indicating a high fever. This will make it even easier to identify the people whose body temperature is significantly elevated.

As mentioned above, in order to improve the temperature reading and secure it against interference, the reference part of the thermosensitive film may be properly provided with a thermoinsulating agent on the side facing the surface of the location where the temperature reading is taken, and the monitoring part may be provided with a thermoinsulating layer on the side facing the surroundings (the outside of the indicator).

### Method of the invention

The invention also concerns a method for producing said temperature monitoring indicators that contain a liquid-crystal element which reacts to temperature changes.

The indicator of the invention can be produced by any technique(s) known in the field of the invention, however, it is preferably produced using the method that includes the following stages:
- providing thermosensitive film of the selected shape and size,
- possibly, applying the thermoinsulating layer on a part of the outer surface of the thermosensitive film (facing the surroundings),
- applying the fixing agent on at least one part of the inner surface of the thermosensitive film, and
- possibly, applying at least one thermoinsulating agent on a part of the inner surface of the thermosensitive film.

The stage of providing thermosensitive film of the selected shape generally involves cutting out pieces in a preset size from a sheet of thermosensitive film. This stage can be completed by any method known in the state of the art, for example, using a laser plotter (e.g. the DOBOT laser plotter equipped with a 450 nm laser with a power of 0.15 W), punching dies, etc.

The stages of applying the thermoinsulating layer, applying the fixing agent, and applying the thermoinsulating agent can be carried out using the techniques described above in relation to individual components of the indicator of the invention.

### Use of the invention

The next aspect of the invention concerns the use of said temperature monitoring indicators that contain a liquid-crystal element which reacts to temperature changes.

The main practical use of the indicator of the invention is to monitor the temperature of the human body. However, it can also be used to monitor other temperatures, for example those in industrial processes, under laboratory conditions, as well as at home - in aquaristics, terraristics, etc.

In a preferable embodiment of the invention, the indicator of the invention is placed on the surface of human skin, preferably at a clearly visible location, more preferably on the forehead skin. In a particularly preferable embodiment, the indicator is placed in the middle of the forehead or near the middle of the forehead.

The indicator of the invention can have many potential uses, e.g. for monitoring medical personnel, for monitoring people in public means of transport, for monitoring staff in offices, for monitoring the personnel of forces such as the police, the army, the customs service, the border guard or the fire department, for monitoring employees at the workplace. The indicator can also be used at places of quarantine to continuously monitor the temperature of the people who are under observation.

The use of the indicator of the invention increases safety, as it allows people to monitor each other's temperature without using advanced or expensive equipment. When faced with a prolonged epidemic, indicators of the invention may prove to be an important element limiting the spread of pathogens (e.g. viruses) in the society. Indicators of the invention can be widely used at low cost. In countries where the possibility of leaving one's home is restricted, the indicators of the invention may be used by people who leave their homes to do the necessary shopping or to visit a pharmacy / doctor's office. At healthcare facilities, indicators of the invention can be used for monitoring patients who enter the premises.

Use of the indicators of the invention allows to quickly identify people with a fever without using pyrometers or thermal imaging cameras. When using an indicator of the invention, temperature monitoring is a continuous process, and not a one-time process as in the case of testing with a pyrometer.

Thanks to the fact that the thermosensitive film is divided into the monitoring part and the reference part, temperature reading is possible even if the monitored temperature exceeds the temperature range of the applied film. When this happens, the monitoring part will take on a colour that means exceeding the temperature range of the applied film, the reference part will have a neutral colour (depending on the applied film), and, between these parts, a rainbow-coloured bar will appear showing an elevated temperature.

The indicator of the invention may be used independently as a temperature indicator stuck onto the surface of the skin, but it may also be a component of temperature monitoring bands in which case it performs the role of the thermosensitive element.

According to the invention, the word "approximately" or "approx." used above and below should be understood as a deviation of +/-5% from the stated value, reflecting the inaccuracies that may arise when conducting the method of the invention.

### Examples

### Example 1 - Determining the optimal range of colour variation of the thermosensitive film

The first stage of the tests carried out by the creator of the invention was to determine the temperature range of the liquid-crystal film, which range would allow to effectively use such film in the temperature monitoring indicator.

During the measurements, the following thermal imaging cameras were used:
- Flir C2 (thermal detector resolution: 80 x 60 px, field of view (FOV): 41° x 31°, temperature range: -10°C to 150°C) and
- Flir One Pro (thermal detector resolution: 160 x 120 px, viewing angles of the lens: HFOV (horizontal) 55°, VFOV (vertical) 43°, temperature range: -20°C to 400°C), as well as the Measure me MT650 optical pyrometer (temperature range: -50°C to 650°C).

The results of the thermographic tests were evaluated using the "FLIR Tools" software, version 5.1317214.2001.

Measurement conditions included the emissivity of the human skin, which has properties similar to those of a blackbody (Novel approach to assess the emissivity of the human skin, Journal of Biomedical Optics 14 2, 024006 March/April 2009)

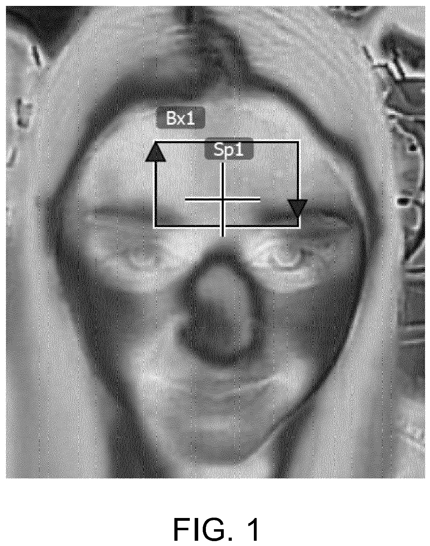

The tests were carried out on 12 healthy people (without symptoms of fever) who stayed for approx. 1 hour in a room with a temperature of 23°C. The tests were carried out using the Flir C2 thermal imaging camera. The images were recorded from a distance of approx. 1 m, as shown in Fig. 1

During observation, the camera receives not only radiation from the object itself. The camera also receives radiation from the environment, reflected from the surface of the object. Both components of radiation are (to some extent) suppressed by the air between the object and the measuring instrument.

The data were analysed in the Flir Tools software, entering an emissivity of 100% (practically equivalent to the emissivity of a blackbody) and a reflective temperature of 23°C.

The results of the measurements are presented in Table 1.

**Table 1. Results of the measurements carried out**

| Tested person No. | Temperature at the measurement point (SP1) | Maximum temperature of the Bx1 area | Minimum temperature of the Bx1 area | Average temperature of the Bx1 area | Ambient temperature |
|---|---|---|---|---|---|
| 1 | 34.3°C | 34.9°C | 33.2°C | 34.2°C | 23°C |
| 2 | 33.8°C | 34.2°C | 32.3°C | 33.8°C | 23°C |
| 3 | 34.3°C | 34.5°C | 32.9°C | 33.9°C | 23°C |
| 4 | 34.6°C | 34.9°C | 34.1°C | 34.6°C | 23°C |
| 5 | 33.7°C | 34.2°C | 31.2°C | 33.6°C | 23°C |
| 6 | 35°C | 35.1°C | 33.7°C | 34.8°C | 23°C |
| 7 | 34.8°C | 35.5°C | 29.3°C | 34.5°C | 23°C |
| 8 | 34.3°C | 35.1°C | 33.5°C | 34.3°C | 23°C |
| 9 | 34.6°C | 34.8°C | 33.8°C | 34.6°C | 23°C |
| 10 | 34.9°C | 35.1°C | 30.1°C | 34.5°C | 23°C |
| 11 | 34.4°C | 35°C | 30.8°C | 33.6°C | 23°C |
| 12 | 34.9°C | 34.9°C | 33.9°C | 34.7°C | 23°C |

Point SP1 is the target location for application of the indicator of the invention. However, the indicator may by accident be placed inaccurately outside this point. Therefore, the test also included measurement of the maximum, minimum, and average temperature of the area around point SP1 (the Bx1 area marked with a rectangle in FIG. 1).

The data obtained during the test suggest that the forehead skin temperature measured thermographically does not exceed 35°C in any of the tested people. In 25% of the test subjects, the maximum temperature in the Bx1 area was 35.1°C. It may be expected that in the case of an indicator of the invention separated from the skin by a thin layer of glue, increasing the temperature by 0.1°C will not affect the change in its colour.

The results of the tests carried out by the creator of this invention show that the average difference between human forehead skin temperature and human body temperature at an ambient temperature of approx. 22°C is approx. 3°C.

The tests carried out by the creator show that the thermosensitive film applied in the indicator of the invention should have a colour variation range from approx. 35°C to approx. 40°C. Below this range, the film should preferably remain black.

Thermosensitive film placed so that it comes into contact with the forehead skin in people with normal body temperature should not reach a temperature above 35°C, but this refers to a situation where the tested person is in a room with a temperature below 23°C.

If the ambient temperature is lower than 20°C, the forehead skin temperature may be lower than the body temperature by >3°C. An indicator intended to monitor the forehead temperature at lower temperatures should have a correspondingly lower temperature range of colour variation. Alternatively or additionally, under such conditions, the monitoring part of the thermosensitive film of the indicator of the invention may be provided with a thermoinsulating layer as described above.

At a higher ambient temperature, the thermosensitive film should have a colour variation range adequately shifted up the temperature scale.

### Example 2 - Indicator of the invention

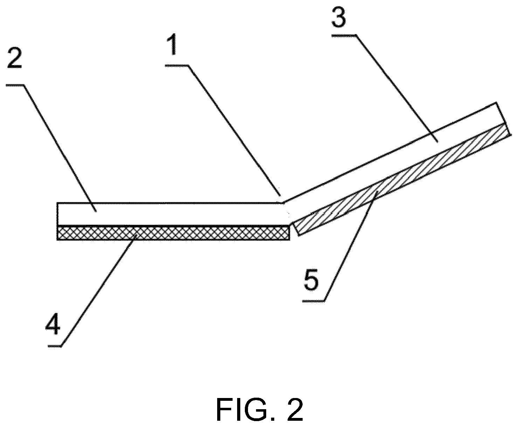

Fig. 2 shows a diagrammatic cross-section of an embodiment of the indicator of the invention. The temperature monitoring indicator contains the thermosensitive film 1 (the liquid-crystal element) that has been cut out in the shape of a rectangle sized 1.25 cm x 2.5 cm from a sheet of thermosensitive film (Braster SA, colour variation range: 35°C-37°C) using a laser plotter (DOBOT equipped with a 450 nm laser with a power of 0.5 W). On some of its surface (approx. 50%), the thermosensitive film 1 has the adhesive layer 4 (the fixing element) made of the Rudaspray® acrylic glue (NOBAMED Paul Danz AG, Germany) with a thickness of 0.02 mm. Additionally, the thermosensitive film has (on a surface of approx. 50%) the thermoinsulating element in the form of a 0.2 mm thick sheet of paper 5 glued onto a part of the thermosensitive film. In this way, the monitoring part 2 and the reference part 3 are created on the thermosensitive film.

### Example 3 - Indicator of the invention

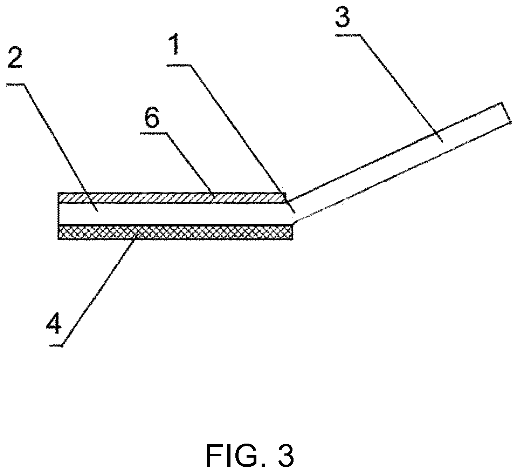

Fig. 3 shows a diagrammatic cross-section of another embodiment of the indicator of the invention. In Example 3, the temperature monitoring indicator contains the thermosensitive film 1 that has been cut out in the shape of a rectangle sized 1.25 cm x 2.5 cm from a sheet of thermosensitive film (Edmund Optics, colour variation range: 35°C-40°C). On some of its surface (approx. 50%), the thermosensitive film 1 presented in Fig. 3 has the adhesive layer 4 made of the Rudaspray® glue (NOBAMED Paul Danz AG) with a thickness of 0.03 mm, creating the monitoring part 2. Unlike in Example 2, in this embodiment the thermosensitive film does not have the thermoinsulating element, and the insulation effect is created by the air between the bent reference part 3 of the thermosensitive film and the skin surface. Moreover, the upper surface of the monitoring part 2 of the thermosensitive film has the thermoinsulating layer 6 made of thermoinsulating paint that contains vacuum-hollow nano-ceramic microspheres.

### Example 4 - Indicator of the invention

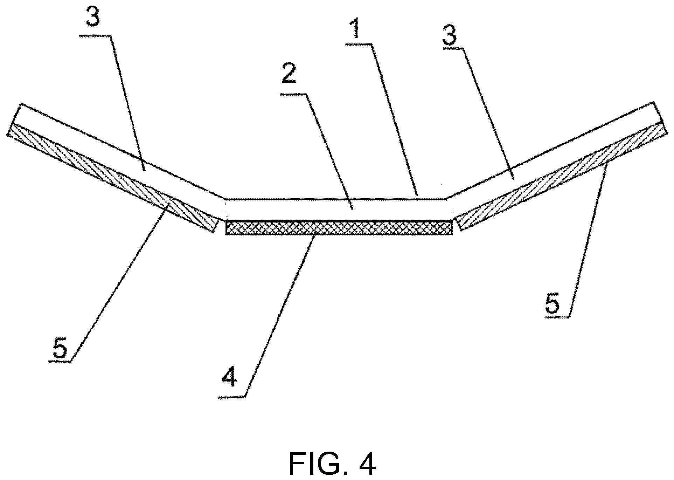

Fig. 4 shows a diagrammatic cross-section of yet another embodiment of the indicator of the invention. In the indicator shown in Fig. 4, the same thermosensitive film was used as in Example 2, with the difference that the strip of film was 1.25 cm x 3.75 cm. In its central part, the thermosensitive film 1 has the adhesive layer 4 made of 0.02 mm thick silicone glue creating the monitoring part 2. On both sides of the monitoring part, there are two reference parts 3, each of which has the thermoinsulating element 5 made of a layer of thermoinsulating paint that contains vacuum-hollow nano-ceramic microspheres.

### Example 5

The indicators described in Examples 2-4 were tested using a temperature-controlled cell culture incubator.

Said indicators were stuck onto the incubator door, and then the temperature was changed within the range from 32 to 42°C. All the indicators of the invention tested in this way reacted to changes in the incubator's temperature as expected.

Below the colour variation range of the film, the monitoring part 2 and the reference part 3 had the same colour. When the lower limit of this range was exceeded, the colour of the monitoring part changed, while the colour of the reference part remained unchanged. After the upper limit of the film's colour variation range was exceeded, a rainbow-coloured bar appeared at the border between the monitoring part 2 and the reference part 3.

Therefore, the tests confirmed the possibility of effective use of indicators of the invention for the monitoring of temperature.

## Claims

1. A temperature monitoring indicator that contains a liquid-crystal element which reacts to temperature changes and at least one fixing agent (4) for placing the indicator at the location where the temperature reading is taken, **characterized by the fact that**
the liquid-crystal element that reacts to temperature changes takes the form of thermosensitive film (1) which is the base layer of the indicator, wherein
the thermosensitive film (1) adheres to the surface of the location where the temperature reading is taken with only a part of its surface.

2. The indicator according to claim 1, which contains at least one thermoinsulating element (5), wherein at least one thermoinsulating element is placed on a part of the surface of the thermosensitive film (1).

3. The indicator according to claim 2, which contains one thermoinsulating element (5).

4. The indicator according to any of the above claims, in which the thermosensitive film (1) has a colour variation range from approx. 33°C to approx. 42°C.

5. The indicator according to any of the above claims, in which the thermosensitive film (1) has a colour variation range from approx. 35.5°C to approx. 40°C.

6. The indicator according to any of the above claims, in which the thermosensitive film has a colour variation range from approx. 35.5°C to approx. 37°C.

7. The indicator according to any of the above claims, in which the fixing agent (4) takes the form of an adhesive layer placed on a part of the thermosensitive film (1) on the side intended for placing at the location where the temperature reading is taken.

8. The indicator according to any of the above claims 1-6, in which the fixing agent (4) takes the form of an adhesive applied on the thermosensitive film (1) from the outside of this film.

9. The indicator according to any of the above claims, in which the thermosensitive film adheres to the surface of the location where the temperature reading is taken - with a surface area that makes up from approx. 20 to approx. 90%, more preferably from approx. 30 to approx. 80%, even more preferably from approx. 40 to approx. 60%, and the most preferably approx. 50% of the total surface area of the thermosensitive film (1).

10. The indicator according to any of the above claims, in which the thermoinsulating element is made of paper, crêpe paper, cardboard, thermoinsulating plastic, polystyrene foam, natural leather, imitation leather, or thermoinsulating paint.

11. The indicator according to any of the above claims, in which the thermosensitive film (1) has a thermoinsulating layer (6) applied on the outer surface of the thermosensitive film (1), on the side opposite the surface on which the fixing element (4) is placed.

12. The indicator according to any of the above claims, in which the location where the temperature reading is taken is the surface of human skin, preferably the forehead skin.

13. The method for producing the indicator specified in any of the claims from 1 to 12, which includes:
• providing a cut-out piece of thermosensitive film (1) of selected shape and size,
• possibly, applying the thermoinsulating layer (6) on a part of the outer surface of the thermosensitive film,
• applying the fixing agent (4) on at least one part of the inner surface of the thermosensitive film (1), and
• possibly, applying at least one thermoinsulating agent (5) on a part of the inner surface of the thermosensitive film (1).

14. The use of the indicator specified in any of the claims from 1 to 12 for monitoring the temperature of the human body.
